# EUROPEAN PATENT APPLICATION

(11) **EP 1 513 002 A1**
(43) Date of publication of application: **09.03.2005**
(21) Application number: 04076568.7
(22) Date of filing: 27.05.2004
(51) Int. Cl.: G02C 9/00

(54) **Connection system for securing sunglasses to eyeglasses**

(30) Priority: 08.09.2003 US 656136
(71) Applicant: United Creation Optical Trading Limited, Kowloon, Hong Kong (CN)
(72) Inventor: Cheng, Siu Kwong, Shatin, New Territories, Hong Kong (CN)
(74) Representative: Chevalier, Renaud Philippe

(57) **Abstract**

A specially designed pair of sunglasses and a pair of specially designed prescription eyeglasses. Alternatively, only the pair of sunglasses includes a special design. This special design includes the use of magnets to secure the bridge portion of the sunglasses to the bridge portion of the pair of eyeglasses. Alternatively, the bridge portions of both the sunglasses and the eyeglasses include magnets of opposite polarity so that the bridge portion of the sunglasses are held to the bridge portion of the eyeglasses.

## Description

### Field of the Invention

The present invention relates to a connection system which is secured to sunglasses or sunlenses to facilitate the mounting of the sunglasses or sunlenses on a bridge of a pair of present eyeglasses.

### Background of the Invention

There are many different systems directed to the mounting of sunglasses in front of the lenses of a pair of prescription eyeglasses. These assemblies are commonly referred to as "clip-ons". As their name implies, a sunglass frame is secured around the rims holding the lenses in a prescription eyeglass frame. Usually, the plurality of pins projecting from the sung lass frame curve around the front and project onto the rear surface of the prescription eyeglass lenses.

Oftentimes, the existing assemblies for clipping on a sung lass frame to a pair of prescription glasses is complicated in its construction and particularly difficult to mount onto an eyeglass frame, especially when one is driving or participating in an activity that demands their attention. Therefore, there is a need for sunglasses which may easily and quickly be fitted onto any pair of eyeglasses.

### Summary of the Invention

Accordingly, it is an object of the present invention to quickly and easily, with little mechanical dexterity, clip a pair of sunglasses onto a bridge portion of a pair of prescription eyeglasses.

This object is accomplished by a specially designed pair of sunglasses and a pair of specially designed prescription eyeglasses. Alternatively, only the pair of sunglasses includes a special design. This special design includes the use of magnets to secure the bridge portion of the sunglasses to the bridge portion of the pair of eyeglasses. Alternatively, the bridge portions of both the sunglasses and the eyeglasses include magnets of opposite polarity so that the bridge portion of the sunglasses are held to the bridge portion of the eyeglasses.

Accordingly, it is an object of the present invention to hold a pair of sunglasses on a pair of eyeglasses by magnets.

It is another object of the present invention to connect a bridge portion of a pair of sunglasses to a bridge portion of a pair of eyeglasses by magnets.

It still yet another object of the present invention to connect a bridge portion of a pair of sunglasses to a bridge portion of a pair of eyeglasses by magnets with the magnets of the sunglasses being attracted to the metal of the bridge portion of the pair of eyeglasses.

It is still yet another object of the present invention to connect magnets of a bridge portion of a pair of sunglasses to magnets of a bridge portion of a pair of eyeglasses by the opposite polarities of the magnets in the bridge portion of the sunglasses being attracted to the polarities of the magnets of the bridge portion of the eyeglasses.

These and other objects of the invention, as well as many of the intended advantages thereof, will become more readily apparent when reference is made to the following description taken in conjunction with the accompanying drawings.

### Brief Description of the Drawings

Figure 1 is a perspective view of a pair of sunglasses incorporating the principles of the present invention.
Figure 2 is a rear perspective view of the pair of sunglasses shown in Figure 1.
Figure 3 is an enlarged detailed view of the area encircled in Figure 1.
Figure 4 is an inverted rear view of the bridge portion of the sunglasses shown in Figure 1.
Figure 5 is a plan view of the bridge portion of the sunglasses shown in Figure 1.
Figure 6 is a front view of the bridge portion of the sunglasses shown in Figure 1.
Figure 7 is an exploded view of a pair of sunglasses and a pair of eyeglasses incorporating the principles of the present invention.
Figure 8 illustrates the movement of the pair of sunglasses with respect to the pair of eyeglasses for mounting of the sunglasses on the eyeglasses.
Figure 9 is an assembled view of the pair of sunglasses amounted on the pair of eyeglasses.
Figure 10 is a rear exploded view of a pair of sunglasses and a pair of eyeglasses incorporating the principles of the present invention.
Figure 11 is a rear view of the movement of the pair of sunglasses with respect to the pair eyeglasses for mounting of the sunglasses on the eyeglasses.
Figure 12 is a rear assembled view of the pair of sunglasses mounted on the pair of eyeglasses.
Figure 13 is a front view of a pair of eyeglasses cooperating with the pair of sunglasses of the present invention.
Figure 14 is a plan view of the pair of sunglasses mounted on the pair of eyeglasses.
Figure 15 is an enlarged detail view of the area encircled in Figure 14.
Figure 16 is an inverted rear view of the bridge portion of the pair of eyeglasses shown in Figure 13.
Figure 17 is a plan view of the bridge portion of the pair of eyeglasses shown in Figure 13.
Figure 18 is a front view of the bridge portion of the pair of sunglasses shown in Figure 13.
Figure 19 is a plan view of the magnet mounted in the bridge portion of the pair of eyeglasses as shown in Figure 15.
Figure 20 is a front view of the magnet shown in Figure 19.
Figure 21 is a plan view of the magnet mounted in the bridge portion of the pair of sunglasses as shown in Figure 15.
Figure 22 is a front view of the magnet shown in Figure 21.

### Detailed Description of the Preferred Embodiments

In describing a preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar purpose.

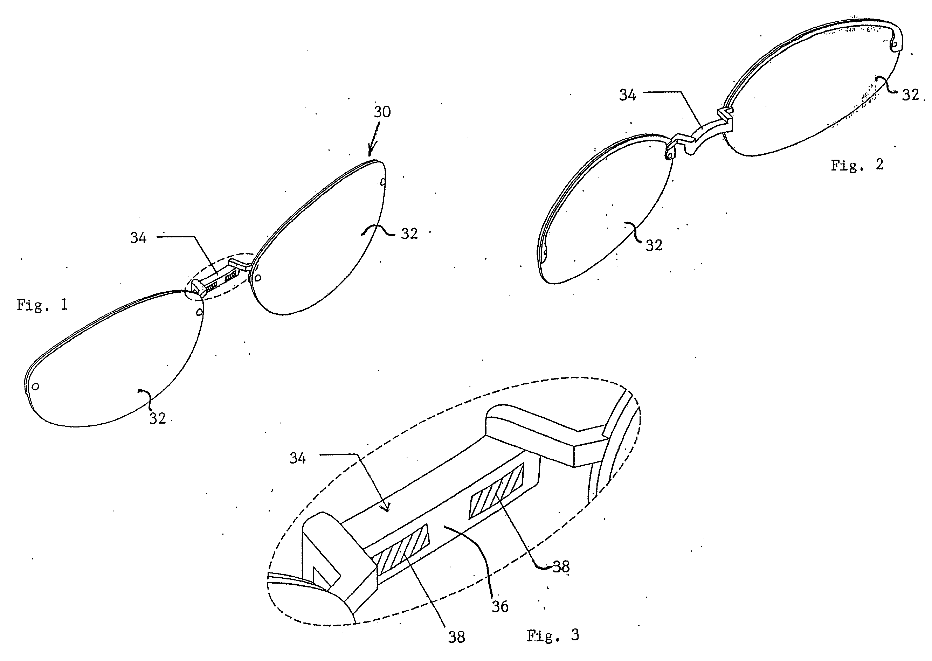

With reference to the drawings, in general, and to Figures 1-3, in particular, a pair of sunglasses embodying the teachings of the subject invention is generally designated at 30. With reference to its orientation in Figure 1, the sunglasses includes two sunlenses 32 interconnected by a bridge portion 34. It is not critical that the sunlenses include an exterior rim or are rimless, or include only half of a rim as shown in Figure 2. It is only important that the lenses are interconnected by a bridge portion 34.

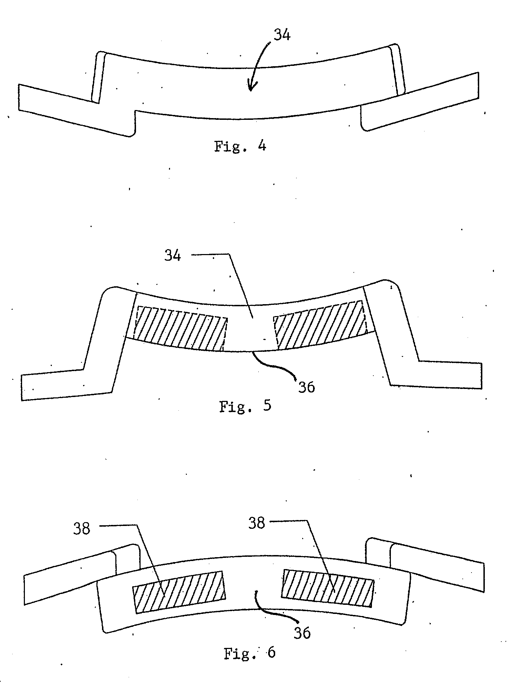

As shown in more detail in Figure 3, embedded in a front surface 36 of the bridge portion 34 are a pair of magnets 38. Additional details of the location of the magnets 38 in the bridge portion 34 are shown in Figures 4 through 6.

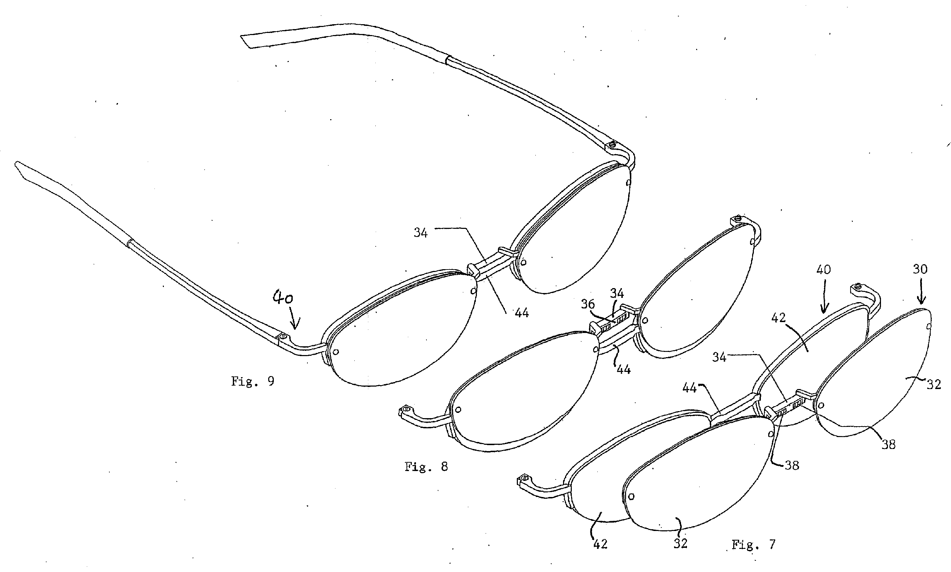

In Figure 7 through 9, the assembly of the sunglasses 30 onto a pair of eyeglasses 40 is shown. Initially, the sunglasses 30 are positioned in front of the eyeglasses 40. The lenses 32 of the sunglasses 30 are positioned in front of and aligned with the lenses 42 of the eyeglasses 40.

The bridge portion 34 of the sunglasses is then moved, as shown in Figure 8, to be located behind the bridge portion 44 of the pair of eyeglasses with the lenses 32 positioned in front of the lenses 42. The bridge portion 34 is then lowered so that the front surface 36 of the bridge portion is located in contact with the rear surface 46 of the bridge portion 44. In the embodiments shown in Figures 7 through 9, it is possible, if the bridge portion 44 is of a metal material, to have the magnets 38 of the bridge portion 34 of the sunglasses 30 secure the sunglasses 30 to the eyeglasses 40. By this connection system the magnets 38 of the bridge portion 34 will be completely concealed as a result of the mutual attraction of the opposite poles of the magnets.

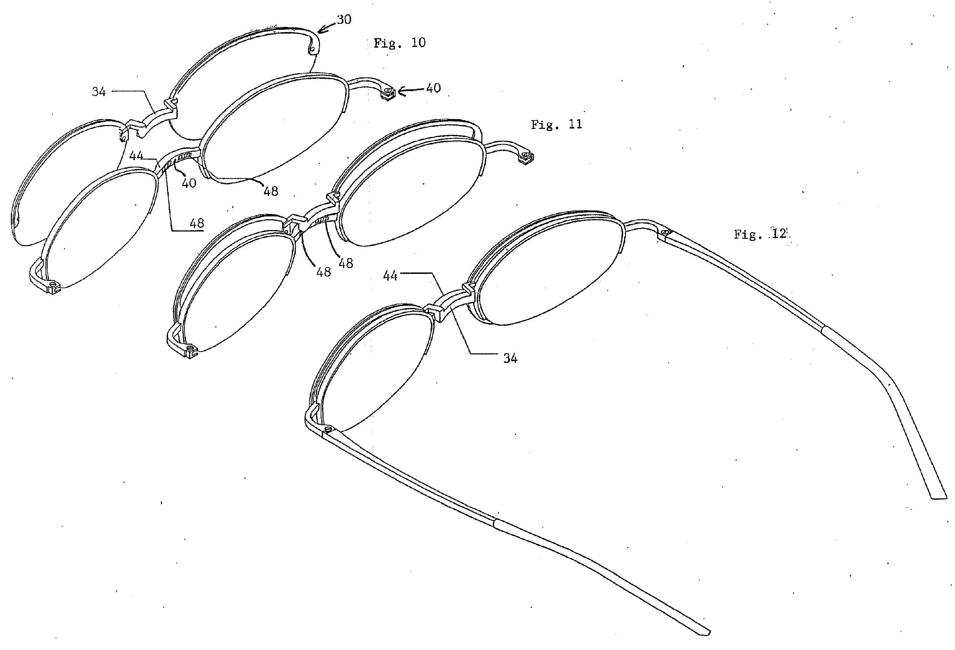

Alternatively, the eyeglasses of 40 are of a construction as seen in Figures 10 and 11 such that the rear surface 46 of the bridge portion 44 includes two magnets 48. The magnets 48 at their exposed face in the rear surface 46 of bridge portion 44, is of an opposite polarity to the surface of the magnets 38 located in front surface 36 of the sunglasses 30. There would therefore be a mutual attraction of the opposite poles of the magnets in the bridge portions 36, 44 to hold the sunglasses 30 on the eyeglasses 40. Similarly, the magnets 48 of the bridge portion 44 will be completely concealed.

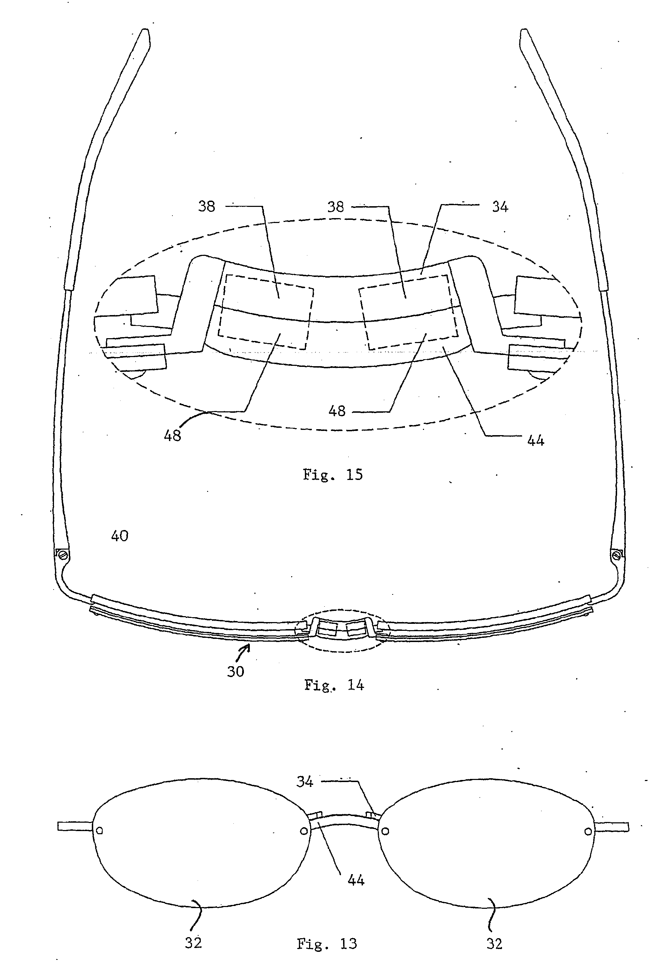

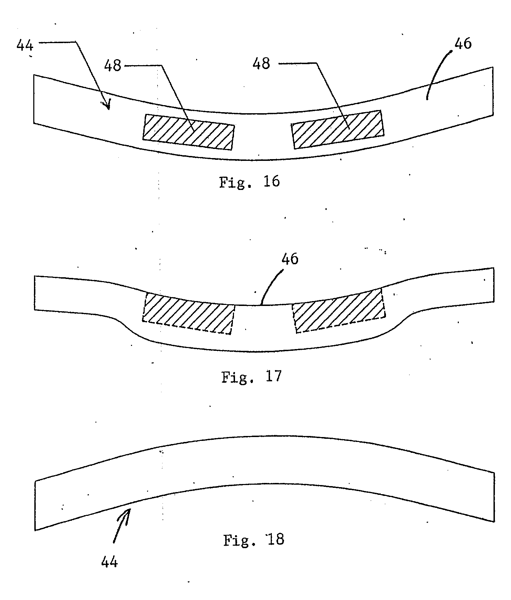

In Figure 13 through 15, the details of the engagement of the opposite polarity magnets is shown in greater detail. In Figures 16 through 18, the details of the mounting of the magnets 48 in the rear surface 46 of the bridge portion 44 of the eyeglasses 40 is shown.

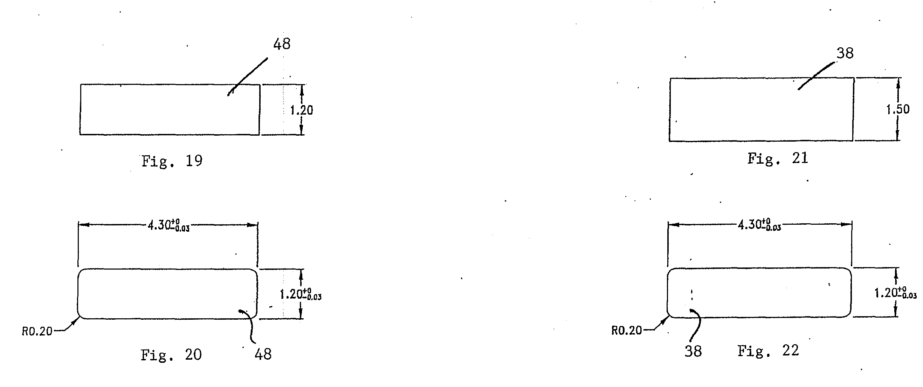

In Figures 19 through 22, the relative dimensioning of the magnets 38, 48 is shown. In Figures 19 and 20 the magnets 48 in the bridge portion 44 of the eyeglasses 40 has a height and depth of 1.2 centimeters and a length of 4.3 centimeters. Both of the magnets 38 and 48 are made of N45 material.

In contrast, while the height of the magnets 38 in the bridge portion 34 of the sunglasses 30 is also 1.2 centimeters, the depth of the magnets 38 is 1.5 centimeters. As in the magnets 48, the magnets 38 have a length of 4.3 centimeters.

The foregoing description should be considered as illustrative only of the principles of the invention. Since numerous modifications and changes will readily occur to those skilled in the art, it is not desired to limit the invention to the exact construction and operation shown and described, and, accordingly, all suitable modifications and equivalents may be resorted to, failing within the scope of the invention.

## Claims

1. A connection system for securing a pair of sunglasses to a pair of eyeglasses, said connection system comprising a pair of sunglasses having two lenses interconnected by a bridge portion,
a pair of eyeglasses having two lenses interconnected by a bridge portion, and
at least one of said bridge portion of said sunglasses and said bridge portion of said eyeglasses includes a pair of magnets for securing said sunglasses and said eyeglasses together, such that when coupled, due to the locations of said magnets said sunglasses and said eyeglasses are attached together.

2. The connection system as claimed in claim 1, wherein said magnets are embedded in said at least one of said bridge inner portion of said sunglasses and said bridge inner portion of said eyeglasses.

3. The connection system as claimed in claim 2, wherein said magnets are rectangular.

4. The connection system as claimed in claim 3, wherein said magnets that each has a height of 1.2 centimeters, a depth of 1.2 centimeters and a length of 4.3 centimeters.

5. The connection system as claimed in claim 3, wherein said magnets that each has a height of 1.2 centimeters, a depth of 1.5 centimeters and a length of 4.3 centimeters.

6. The connection system as claimed in claim 1, wherein said magnets are embedded in one of the bridge inner portion of the sunglasses and the bridge inner portion of the eyeglasses and the other of the bridge portion of the sunglasses and the bridge portion of the eyeglasses is made of metal.

7. The connection system as claimed in claim 1, wherein said magnets are embedded in the bridge inner portion of the sunglasses and the bridge inner portion of the eyeglasses.

8. The connection system as claimed in claim 7, wherein a face of said magnets in the bridge inner portion of the sunglasses is of an opposite polarity from a face of said magnets in the bridge inner portion of the eyeglasses and the embedded magnets in the bridge inner portions will not be disclosed as a result of the mutual attraction of the opposite poles of the magnets in the bridge portions.

9. The connection system as claimed in claim 8, wherein a depth of the magnet in the bridge portion of the sunglasses is greater than a depth of the magnet in the bridge portion of the eyeglasses.

10. The connection system as claimed in claim 9, wherein a length of the magnet in the bridge portion of the sunglasses is equal to a length of the magnet in the bridge portion of the eyeglasses.

11. A connection system as claimed in claim 10, wherein a height of the magnet in the bridge portion of the sunglasses is equal to a height of the magnet in the bridge portion of the eyeglasses.
